# EUROPÄISCHE PATENTSCHRIFT

(11) **EP 0 981 061 B1**
(45) Veröffentlichungstag und Bekanntmachung des Hinweises auf die Patenterteilung: **27.04.2005**
(21) Anmeldenummer: 99111350.7
(22) Anmeldetag: 10.06.1999
(51) Int. Cl.: G01V 3/15, G01D 11/24

(54) **Bedienkopf**
Control unit
Unité de commande

(30) Priorität: 14.08.1998 DE 29814664 U
(43) Veröffentlichungstag der Anmeldung: 23.02.2000
(73) Patentinhaber: FIRMA ING. KLAUS EBINGER, D-51149 Köln (DE)
(72) Erfinder: Klaus, Herbert, 51147 Köln (DE); Günnewig, Augustinus, 50733 Köln (DE); Ebinger, Klaus, 51143 Köln (DE)
(74) Vertreter: Heim, Hans-Karl, Dipl.-Ing.

(56) Entgegenhaltungen:
- DE-A- 3 035 094
- DE-A- 3 232 740
- DE-U- 8 532 192
- DE-U- 9 114 716

## Beschreibung

Die Erfindung betrifft einen Bedienkopf für eine rohrförmige Sonde, insbesondere eine Land- oder Unterwassersonde, gemäß Oberbegriff des Anspruchs 1.

Ein gattungsgemäßer Bedienkopf ist aus dem deutschen Gebrauchsmuster G 85 32 192 bekannt. Dieser zylinderförmige Bedienkopf ist so befestigt, dass seine Zylinderachse mit der Achse der angebrachten Sondenteile gleich ist. An der Mantelfläche sind abgeflachte Stellen vorhanden, an denen Bedienelemente angebracht werden können.

Die vorbekannte Anordnung des Bedienkopfes sowie die Anordnung der funktionellen Elemente an dem Bedienkopf hat sich in der Vergangenheit durchaus bewährt. Sie ist allerdings z.B. im Hinblick auf eine möglichst einfache Fertigung, die Flexibilität des Systems sowie die ästhetische Gestaltung des Systems verbesserungsfähig.

Ein anderer, ähnlicher Bedienkopf ist aus dem deutschen Gebrauchsmuster G 91 14 716.6 bekannt. Der Bedienkopf weist Bedienelemente auf, die an den Stirnseiten des Zylinders angeordnet sind. Im eingebauten Zustand ist die Zylinderachse senkrecht zur Achse der an der Mantelfläche des Zylinders angebrachten Sondenteile. Der Bedienkopf ist fest, insbesondere einstückig, mit dem die Geräteelektronik tragenden Rohrelement verbunden.

Der Erfindung liegt die **Aufgabe** zugrunde, einen Bedienkopf zur Verfügung zu stellen, durch welchen die genannten Nachteile beseitigt werden und der ferner eine besonders gute Handhabbarkeit aufweist.

Diese Aufgabe wird mit den Merkmalen des Anspruches 1 gelöst. Danach ist der gattungsgemäße Bedienkopf dahingehend weitergebildet, daß der Zylindermantel mindestens eine ebene Fläche zum Anbringen funktioneller Elemente aufweist, der Körper des Bedienkopfes verjüngte Bereiche aufweist, die an den Stirnflächen des Zylinders angeordnet sind, und die verjüngten Bereiche Anschlußbereiche für rohrförmige, parallel zur Zylinderachse anbringbare Sondenteile aufweisen. Der Zylindermantel weist zwei parallele ebene Flächen zum Anbringen funktioneller Elemente auf. Diese Elemente können beispielsweise Bedienelemente und/ oder Elemente zur Signalausgabe sein. Die verjüngten Bereiche weisen kegelstumpfartige Bereiche auf. Auf einem der kegelstumpfartigen Bereiche befinden sich mindestens Anzeige- und/oder Kontrollelemente.

Bevorzugt handelt es sich bei den funktionellen Elementen um einen Bedienknopf und eine Steckverbindung für einen KopfhöreranschluB.

Bei den Elementen zur Signalausgabe handelt es sich bevorzugt um Leuchtdioden.

Es ist vorteilhaft, wenn der Endbereich mindestens eines der Anschlußbereiche zylinderförmig ist und einen ersten Radius aufweist, wobei ein auf dem kegelstumpfartigen Bereich sitzender zylinderförmiger Bereich des Anschlußbereiches einen zweiten Radius aufweist und der zweite Radius größer ist als der erste Radius.

Dann kann bevorzugt an dem Endbereich ein Innenrohr und an dem auf dem kegelstumpfartigen Bereich sitzenden Bereich ein Außenrohr angeschlossen werden.

Bevorzugt sind Innenrohr und/oder Außenrohr druckwasserdicht an dem Anschlußbereich anschließbar.

Es ist vorteilhaft, wenn der Endbereich und/oder der auf dem kegelstumpfartigen Bereich sitzende Bereich den männlichen Teil einer Schraubverbindung oder einer Steckverbindung bilden.

Bevorzugt wird die Abdichtung mittels mindestens eines O-Ringes verwirklicht.

Durch die vorliegende Erfindung wird ein besonders flexibles System zur Verfügung gestellt. So liegt eine Verbesserung darin, daß der Bedienkopf als separates Bauteil ausgebildet ist und insbesondere nicht fest mit dem die Geräteelektronik enthaltenden Rohrelement verbunden ist. Dadurch können eventuelle Defekte durch einen gezielten Austausch kleiner Bauteile z.B. des Bedienkopfes oder des Elektronikrohres beseitigt werden. Der Bedienkopf der vorliegenden Erfindung kann in besonders einfacher Weise hergestellt werden; zum einen erfolgt die Fertigung isoliert, das heißt unabhängig von den anderen Bauteilen der Sondenanordnung, zum anderen handelt es sich bei dem Bedienkopf um ein grundsätzlich rotationssymmetrisches Bauteil, welches per se in einfacher Weise herstellbar ist, wobei die erforderlichen Modifikationen (Flächen für Anschlußelemente, etc.) durch einfache Techniken (Fräsen etc.) verwirklicht werden können. Weiterhin zeichnet sich eine Sonde, welche mit dem erfindungsgemäßen Bedienkopf bestückt ist, als besonders gut handhabbar aus. Dadurch daß die Zylinderachse mit der Achse der rohrförmigen Sondenelemente fluchtet, gelingt es in einfacher Weise Kanten und dergleichen zu vermeiden, welche die gute Handhabbarkeit ansonsten beeinträchtigen könnten. Ferner erlaubt die erfindungsgemäße Anordnung eine übersichtliche Anordnung der Bedien- und Anzeigeelemente, was insbesondere beim Unterwassereinsatz angesichts der extremen psychischen Situation, in welcher sich der Taucher befindet, besonders vorteilhaft ist. Ferner sollte die Verbesserung im Hinblick auf die ästhetische Gestaltung der Anordnung nicht verkannt werden, welche durch technische Merkmale erreicht wird, nämlich die Parallelität der Zylinder- und der Rohrachsen sowie die Verjüngungen des Bedienkopfes, welche einen formschönen Übergang zwischen Bedienkopf und den Rohrelementen ermöglichen.

Die Erfindung ist im folgenden anhand von Zeichnungen mit weiteren Einzelheiten näher erläutert. Dabei zeigen:
- Fig. 1: eine Ausführungsform des erfindungsgemäßen Bedienkopfes;
- Fig. 2: den Bedienkopf nach Fig. 1 mit angebauten bzw. anbaubaren Elementen; und
- Fig. 3: eine Sondenanordnung mit dem erfindungsgemäßen Bedienkopf nach Fig. 1.

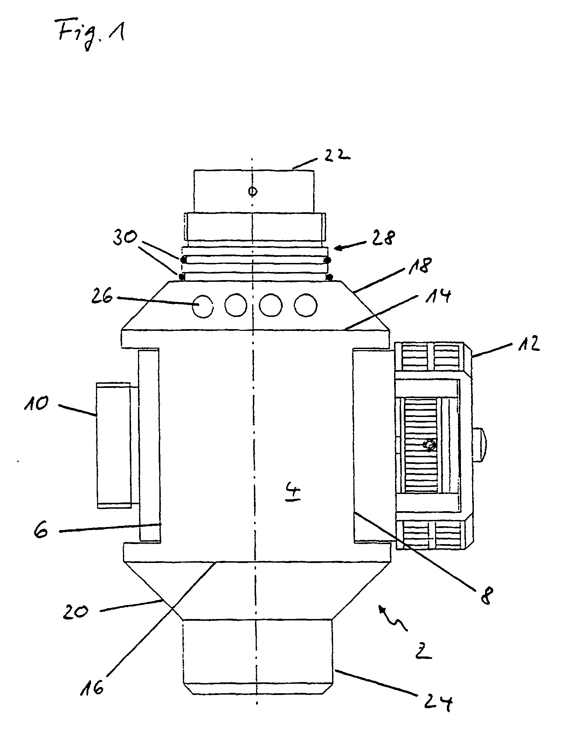

Fig. 1 zeigt einen Bedienkopf 2, dessen zentaler Bereich 4 im wesentlichen zylinderförmig ist. Abschnitte des zylinderförmigen Bereiches 4 weisen Ausfräsungen auf, so daß zwei, im wesentlichen parallele Flächen 6, 8 entstehen. An der einen Fläche 6 ist eine Steckverbindung 10 für einen Signalgeber angebracht, während die andere ebene Fläche 8 der Befestigung eines Bedienknopfes 12 dient. Der Signalgeber kann ein Unterwasser-Lautsprecher oder ein Kopfhörer sein. Ein Vorteil eines Unterwasser-Lautsprechers wäre, daß auch mehrere Taucher, die den Suchvorgang begleiten, das Anzeigesignal wahrnehmen könnten.

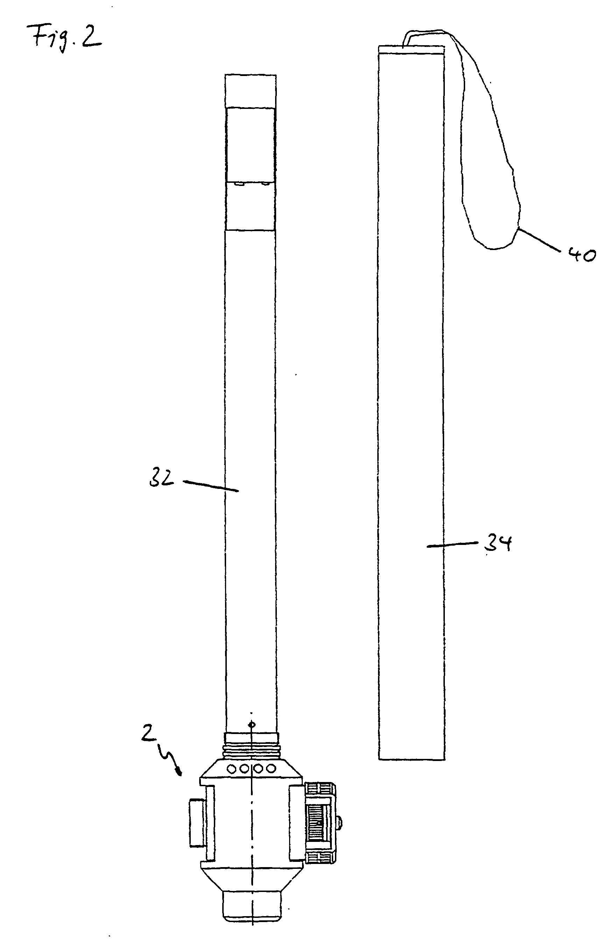

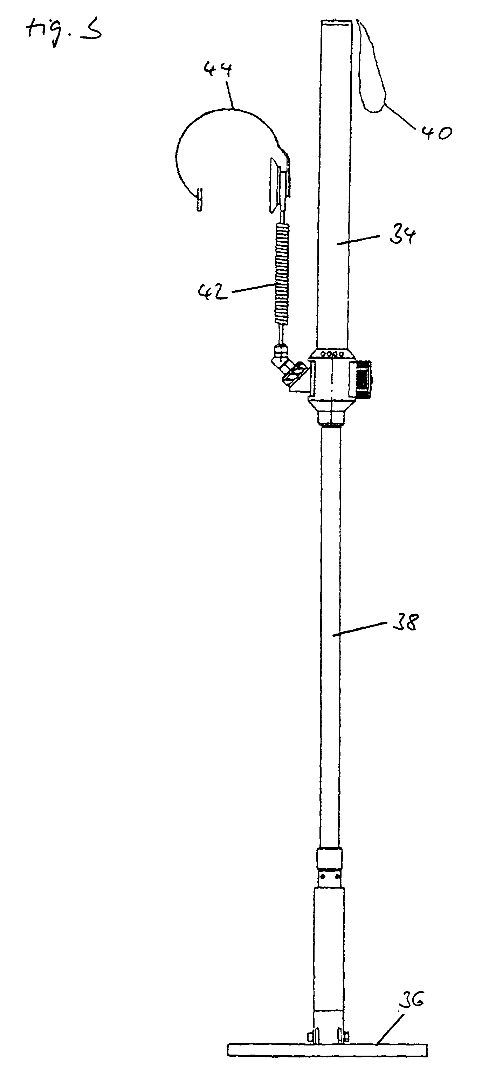

An den Stirnflächen 14, 16 des zylinderförmigen Bereiches 4 schließen sich kegelstumpfartige Bereiche 18, 20 an. Dadurch verjüngt sich der Bedienkopf 2 in Richtung auf die Anschlußstellen 22, 24 für die koaxial zu befestigenden rohrförmigen Sondenelemente. In einem der kegelstumpfartigen Bereiche 18 sind Leuchtdioden 26 vorgesehen, welche als Anzeige- bzw. Kontrollelemente dienen. Auf diesen kegelstumpfartigen Bereich folgen zwei Anschlußstellen 22, 28, die im wesentlichen zylinderförmig sind und verschiedene Radien aufweisen. Die Anschlußstelle 22 dient der Aufnahme eines Elektronikrohres 32 (Fig. 2), während die Anschlußstelle 28, welche den größeren Radius aufweist, zur Aufnahme eines Außenrohres 34 vorgesehen ist. Die Anschlußstelle 28 zur Aufnahme des Außenrohres 34 ist durch O-Ringe 30 druckwasserdicht ausgebildet. Der andere kegelstumpfartige Bereich 20 mündet in einer Anschlußstelle 24, an welcher ein zur Suchspule 36 (Fig. 3) führendes Rohr (38) anbringbar ist.

Fig. 2 zeigt den erfindungsgemäßen Bedienkopf 2 mit aufgesetztem Innenrohr 32, welches die wesentlichen Elemente der Geräteelektronik enthält. Ferner ist das nicht aufgesetzte Außenrohr 34 dargestellt, welches im aufgesetzten Zustand für einen druckwasserdichten Abschluß sorgt. Am Außenrohr 34 ist eine Handschlaufe 40 befestigt.

Fig. 3 zeigt eine vollständige Sondenanordnung mit dem Bedienkopf 2, dem daran anschließenden Außenrohr 34, dem gegenüberliegend anschließenden, zur Sondenspule 36 führenden Rohr 38 sowie dem über ein Kabel 42 mit dem Bedienkopf 2 verbundenen Kopfhörer 44.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Bedienkopf für eine rohrförmige Sonde, insbesondere eine Land- oder Unterwassersonde, zum Verbinden von zwei koaxial zu befestigenden rohrförmigen Sondenelementen, mit einem im Wesentlichen zylinderförmigen zentralen Bereich (4),
wobei an dem Zylindermantel des zentralen Bereiches (4) zwei parallele Flächen (6, 8) ausgebildet sind und
wobei an der einen Fläche (8) ein Bedienknopf (12) befestigt ist,
**dadurch gekennzeichnet,**
- **dass** an der anderen Fläche (6) eine Steckverbindung (10) für einen Signalgeber angebracht ist,
- **dass** sich an die Stirnflächen (14, 16) des zylinderförmigen zentralen Bereichs (4) jeweils kegelstumpfartige Bereiche (18, 20) anschließen,
- **dass** in einem der kegelstumpfartigen Bereiche (18, 20) Anzeige- und Kontrollelemente (26) vorgesehen sind und
- **dass** sich an die kegelstumpfartigen Bereiche (18, 20) zylinderförmige Anschlussstellen (22, 28) für die koaxial zu befestigenden rohrförmigen Sondenelemente anschließen.

2. Bedienkopf nach Anspruch 1,
**dadurch gekennzeichnet,**
**daß** der Bedienknopf (12) Bedienelemente aufweist und die Steckverbindung (10) für den Anschluß eines Unterwasser-Signalgebers, insbesondere für einen Unterwasser-Lautsprecher oder einen Kopfhörer, ausgebildet ist.

3. Bedienkopf nach Anspruch 1 oder 2,
**dadurch gekennzeichnet,**
**daß** die Anzeige- und/oder Kontrollelemente Leuchtdioden (26) sind.

4. Bedienkopf nach einem der vorangehenden Ansprüche,
**dadurch gekennzeichnet,**
**daß** der Endbereich (22) mindestens eines der Anschlußbereiche zylinderförmig ist und einen ersten Radius aufweist, wobei ein auf dem kegelstumpfartigen Bereich (18) sitzender zylinderförmiger Bereich (28) des Anschlußbereiches einen zweiten Radius aufweist und der zweite Radius größer ist als der erste Radius.

5. Bedienkopf nach Anspruch 4,
**dadurch gekennzeichnet,**
**daß** an dem Endbereich (22) ein Innenrohr (32) und an dem auf dem kegelstumpfartigen Bereich (18) sitzenden Bereich (28) ein Außenrohr (34) anschließbar sind.

6. Bedienkopf nach Anspruch 5,
**dadurch gekennzeichnet,**
**daß** das Innenrohr (32) und/oder das Außenrohr (34) druckwasserdicht an dem Anschlußbereich (22, 28) anschließbar sind.

7. Bedienkopf nach einem der Ansprüche 4 bis 6,
**dadurch gekennzeichnet,**
**daß** der Endbereich (22) und/oder der auf dem kegelstumpfartigen Bereich (18) sitzende Bereich (28) den männlichen Teil einer Schraubverbindung oder einer Steckverbindung bilden.

8. Bedienkopf nach einem der Ansprüche 6 oder 7,
**dadurch gekennzeichnet,**
**daß** die Abdichtung mittels mindestens eines O-Ringes erfolgt.

## Claims

1. Control head for a tubular probe, particularly a land or underwater probe, for the connection of two tubular probe elements to be fixed coaxially and having a substantially cylindrical central area (4),
two parallel faces (6, 8) being formed on the cylinder envelope of the central area
and a control knob (12) is fixed to one face (8),
**characterized in that**
- to the other face (6) is fitted a plug connection (10) for a signal generator,
- in each case truncated cone-shaped areas (18, 20) are connected to the end faces (14, 16) of the cylindrical central area (4),
- indicating and monitoring elements (26) are provided in one of the truncated cone-shaped areas (18, 20) and
- cylindrical connection points (22, 28) for the tubular probe elements to be fixed coaxially are connected to the truncated cone-shaped areas (18, 20).

2. Control head according to claim 1,
**characterized in that**
the control knob (12) has control elements and the plug connection (10) is constructed for the connection of an underwater signal generator, particularly for an underwater loudspeaker or headphone.

3. Control head according to claim 1 or 2,
**characterized in that**
the indicating and/or monitoring elements are light-emitting diodes (26).

4. Control head according to one of the preceding claims,
**characterized in that**
the end region (22) of at least one of the connection areas is cylindrical and has a first radius, a cylindrical region (28) of the connection area resting on the truncated cone-shaped area (18) having a second radius, which is larger than the first radius.

5. Control head according to claim 4,
**characterized in that**
to the end region (22) can be connected an inner tube (32) and to the region (28) resting on the truncated cone-shaped area (18) can be connected an outer tube (34).

6. Control head according to claim 5,
**characterized in that**
the inner tube (32) and/or outer tube (34) can be connected in presswater-tight manner to the connection region (22, 28).

7. Control head according to one of the claims 4 to 6,
**characterized in that**
the end region (22) and/or the region (28) resting on the truncated cone-shaped area (18) form the male part of a screw connection or a plug connection.

8. Control head according to one of the claims 6 or 7,
**characterized in that**
sealing takes place by means of at least one O-ring.

## Revendications

1. Unité de commande pour une sonde tubulaire, notamment une sonde terrestre ou sous-marine, servant à relier deux éléments de sonde tubulaires à fixer coaxialement, avec une zone centrale (4) essentiellement de forme cylindrique, et
la zone centrale présente à sa corps du cylindre deux portées parallèles (6, 8),
et un bouton de commande (12) étant fixée à la une portée (8),
**caractérisée en ce que**
- sur l'autre portée (6), se trouve une liaison à enfichage (10) pour un fournisseur de signal,
- aux faces frontales (14, 16) de la zone centrale cylindrique (4) sont raccordées des zones en forme de tronc de cône (18, 20) respectivement,
- des éléments indicateurs et de contrôle (26) sont prévus dans une des zones (18, 20) en forme de tronc de cône, et
- aux zones en forme de tronc de cône (18, 20) font suite des parties de raccordement (22, 28) en forme de cylindres, pour raccorder les éléments de sonde tubulaires à fixer coaxialement.

2. Unité de commande selon la revendication 1,
**caractérisée en ce que**
le bouton de commande (12) présente des éléments de commande et la liaison à enfichage (10) est constituée pour permettre le raccordement d'un générateur de signal sous-marin, notamment un haut-parleur sous-marin ou un casque d'écoute.

3. Unité de commande selon la revendication 1 ou 2,
**caractérisée en ce que**
les éléments indicateurs et/ou de contrôle sont des diodes électroluminescentes (26).

4. Unité de commande selon une des revendications précéden tes,
**caractérisée en ce que**
la partie d'extrémité (22) d'au moins une des zones de raccordement a la forme d'un cylindre présentant un premier rayon, tandis que la partie (28) de la zone de raccordement qui a la forme d'un cylindre posé sur la zone en forme de tronc de cône (18) présente un second rayon qui est supérieur au premier rayon.

5. Unité de commande selon la revendication 4,
**caractérisée en ce qu'**
à la partie d'extrémité (22) peut être raccordé un tube interne (32), tandis qu'un tube externe (34) peut être raccordé à la partie (28) située sur la zone (18) en forme de tronc de cône.

6. Unité de commande selon a revendication 5,
**caractérisée en ce que**
le tube interne (32) et/ou le tube externe (34) peuvent être raccordés avec étanchéité à l'eau sous pression, à la partie de raccordement (22, 28).

7. Unité de commande selon une des revendications 4 à 6,
**caractérisée en ce que**
la partie d'extrémité (22) et/ou la partie (28) située sur la zone (18) en forme de tronc de cône constituent la partie mâle d'une liaison par filetage ou par enfichage.

8. Unité de commande selon la revendication 6 ou 7,
**caractérisée en ce que**
l'étanchéité est assurée par au moins un joint tonique (O-ring).
